(19) Europäisches Patentamt
European Patent Office
Office européen des brevets

(11) **EP 2 755 360 A1**

(12) **EUROPÄISCHE PATENTANMELDUNG**

(43) Veröffentlichungstag:
**16.07.2014  Patentblatt 2014/29**

(51) Int Cl.:
***H04L 27/14*** *(2006.01)*

(21) Anmeldenummer: **14000065.4**

(22) Anmeldetag: **09.01.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **10.01.2013  DE 102013000312**

(71) Anmelder: **ABB Technology AG**
**8050 Zürich (CH)**

(72) Erfinder: **Pook, Stefan**
**32457 Porta Westfalica (DE)**

(74) Vertreter: **Marks, Frank et al**
**C/o ABB AG, GF-IP**
**Oberhausener Str. 33**
**40472 Ratingen (DE)**

(54) **Demodulator für frequenzumgetastete Signale unter Verwendung des Goertzel-Algorithmus**

(57)    Die Erfindung betrifft einen Demodulator für frequenzumgetastete Signale unter Verwendung des Goertzel-Algorhitmus nach der allgemeinen rekursiven Berechnungsvorschrift, wobei

$$c_{re} = 2 * \cos\left(2 * \pi * \frac{f_g}{f_s}\right)$$

mit der Abtastfrequenz $f_s$ und der gesuchten Frequenz $f_g$ ist. Zur Verminderung des Rechenaufwands in speiseleistungsbegrenzten Einrichtungen wird vorgeschlagen, dass die Abtastfrequenz $f_s$ ein ganzzahliges Vielfaches der Frequenz $f_g$ der gesuchten diskreten Spektralkomponente ist.

Figur 1

**Beschreibung**

Die Erfindung betrifft einen Demodulator für frequenzumgetastete Signale unter Verwendung des Goertzel-Algorhitmus.

Die Frequenzumtastung (englisch Frequency Shift Keying, FSK) ist eine Modulationstechnik zur Übertragung von Digitalsignalen, die unempfindlich gegen Störungen ist. Bei der Frequenzumtastung wird die Trägerfrequenz einer periodischen sinusförmigen Schwingung zwischen einem Satz unterschiedlicher Frequenzen verändert, welche die einzelnen Sendesymbole darstellen.

Ein Sendesymbol wird bei der Modulation einer bestimmten Sendefrequenz zugewiesen, bei der Demodulation erfolgt die Erkennung einer bestimmten Frequenz und die Ausgabe des entsprechenden Symbols zur weiteren Datenverarbeitung. Ein wesentlicher Parameter der Frequenzumtastung ist die ganzzahlige Anzahl der zur Verfügung stehenden Sendefrequenzen.

In einfachster Form liegen nur zwei verschiedene Symbole vor, sogenannte binäre FSK, die über zwei unterschiedliche Symbolfrequenzen f1 und f2 übertragen werden. In diesem Fall ist die Bitrate gleich der Symbolrate. Diese Form wird bevorzugt zur Datenübertragung nach dem HART-Protokoll in der Mess- und Regeltechnik verwendet.

Der Goertzel-Algorithmus, http://de.wikipedia.org/wiki/Goertzel-Algorithmus, ist ein Verfahren aus der digitalen Signalverarbeitung und stellt eine besondere Form der diskreten Fourier-Transformation (DFT) dar. Im Gegensatz zu den verschiedenen schnellen Berechnungsmethoden bei der diskreten Fouriertransformation (FFT), welche immer alle diskreten Spektralkomponenten in einem Block berechnen, ist es mit dem Goertzel-Algorithmus möglich, nur einzelne diskrete Spektralanteile zu berechnen.

Der Algorithmus basiert auf einer Struktur bestehend aus einem digitalen Filter, das um eine Zustandssteuerung erweitert ist. Die Zustände unterteilen die Berechnung in den Rückwärtszweig, in dem die im Zeitbereich abgetasteten Eingangswerte geladen werden, und in einen Vorwärtszweig, der das Ausgangssignal liefert. Die Rückwärtsschleife wird bei jedem digitalen Abtastwert durchlaufen und ist als ein rekursives digitales Filter mit zwei Zustandsspeichern und einem Akkumulator aufgebaut. Der Vorwärtszweig wird erst nach N Abtastwerten einmalig durchlaufen und liefert aus den Zustandsspeichern den berechneten komplexen Ausgangswert, die spektrale Komponente nach Betrag und Phase. Die Anzahl der Abtastwerte N kann beliebige positive ganzzahlige Werte annehmen.

Es ist bekannt, dass mit zunehmender Anzahl der Abtastwerte N die Güte der Erkennung einer diskreten Spektralkomponente steigt.

Pro Berechnung einer Spektralkomponente, bei FSK die Symbolfrequenzen f1 und f2, sind bei dem Goertzel-Algorithmus 4N Additionen und 4N Multiplikationen notwendig. Die Verwendung des Goertzel-Algorithmus bei der FSK-Demodulation ist grundsätzlich aus der US 5,818,296 A bekannt. Die Implementierung des Goertzel-Algorithmus ist in dem Dokument "The Goertzel Algorithm", http://eetimes.com/design/embedded/4024443/The-Goertzel-Algorithm, beschrieben.

Darüber hinaus ist aus dem Application Report der Firme Texas Instruments "Modified Goetzel Algorithm in DTMF Detection Using the TMS320C80", 1996, Digital Signal Processing Solutions, eine technische Umsetzung bekannt. Diese bezieht sich auf die Erkennung von Wahltönen und deren Kombinationen des Mehrfrequenztonwahlverfahrens in der Telefonie. Dabei werden die variablen Tonwahlfrequenzen, die zwischen 697 Hz und 1477 Hz liegen, mit einer festen Abtastrate von 8 kHz abgetastet.

Der Goertzel-Algorithmus ist prinzipiell auch geeignet zurDemodulation von FSK-Signalen, wie sie in der Automatisierungstechnik zur Kommunikation zwischen zentralen und peripheren Einrichtungen verwendet werden. Dem steht jedoch der immernoch recht hohe Rechenaufwand entgegen, dessen Zeit- und Leistungsbedarf insbesondere in echtzeitfähigen peripheren Einrichtungen, die aus einer aus Gründen des Explosionsschutzes leistungsbegrenzten Leiterschleife gespeist werden, nicht zur Verfügung steht. Einer derartigen Einrichtung stehen maximal 96 mW zu ihrem gesamten Betrieb zur Verfügung. Dieser umfasst zumindest aber nicht abschließend Mittel zur Kommunikation, zur Signalverarbeitung entsprechend der jeweiligen automatisierungstechnischen Aufgabe, zur Signalwandlung, zur Messwerterfassung oder Stellwertausgabe sowie Diagnosemittel.

Der Erfindung liegt daher die Aufgabe zugrunde, einen Demodulator für frequenzumgetastete Signale unter Verwendung des Goertzel-Algorhitmus anzugeben, dessen benötigter Rechenaufwand es gestattet, in speiseleistungsbegrenzten Einrichtungen implementiert zu werden.

Erfindungsgemäß wird diese Aufgabe mit den Mitteln des Patentanspruchs 1 gelöst. Darüber hinaus wird diese Aufgabe verfahrensgemäß durch die Schritte des Patentanspruchs xx gelöst. Vorteilhafte Ausgestaltungen der Erfindung sind jeweils in den rückbezogenen Ansprüchen angegeben.

Die Erfindung geht aus von dem für sich bekannten Goertzel-Algorhitmus nach der allgemeinen rekursiven Berechnungsvorschrift

$$M = s[n]^2 + s[n-1]^2 + s[n] * s[n-1] * c_{re}$$

mit

$$s[n] = x[n] + c_{re} * s[n-1] - s[n-2]$$

wobei

M     die Magnitude der gesuchten diskreten Spektralkomponente,
x[n]   die Abtastwerte des Eingangssignals,
s[n]   Zustandssignale und
$c_{re}$    der Rückkopplungskoeffizient des Zustandssig-
      nals s[n-1]

sind.

Der Rückwärtszweig des digitalen Filters nach dem für sich bekannten Goertzel-Algorhitmus umfasst eine erste und eine zweite Rückkopplungsstufe. In der ersten Rückkopplungsstufe wird der Zustand eines ers-ten Zustandsspeichers mit dem Rückkopplungskoeffizi-enten $c_{re}$ auf das Eingangssignal x[n] rückgekoppelt.

Dieser Rückkopplungskoeffizient $c_{re}$ wird durch folgende Gleichung beschrieben:

$$c_{re} = 2 * \cos(2 * \pi * \frac{f_g}{f_s})$$

wobei bedeuten:

$f_s$ - Abtastfrequenz
$f_g$ - gesuchte Frequenz, Symbolfrequenz

Erfindungsgemäß ist die Abtastfrequenz ein ganzzahliges Vielfaches der Frequenz der gesuchten diskreten Spektralkomponente.

Insbesondere beträgt das Verhältnis der Abtastfrequenz zur Frequenz der gesuchten diskreten Spektralkomponente genau einem der Werte 3, 4 und 6.

Bei einem beliebigen Verhältnis der Abtastfre-quenz $f_s$ zur jeweiligen Frequenz der gesuchten diskreten Spektralkomponente $f_g$ von $f_s/f_g \neq [3, 4, 6]$ nimmt der Koeffizient $c_{re}$ einen Wert aus dem Bereich der reellen Zahlen an. Die rechentechnische Implementierung zur Berechnung der Rückkopplungsgröße aus dem ersten Zustandsspeicher ist eine multiple Folge von Multiplikationen und Additionen. Insbesondere die Multiplikationen erzwingen einen vergleichsweise hohen rechentechnischen Aufwand.

Bei einem Verhältnis der Abtastfrequenz **$f_s$** zur jeweiligen Frequenz der gesuchten diskreten Spektralkomponente $f_g$ von **$f_s$**/$f_g$ = 3 wird der Koeffizienten $c_{re}$ = -1. Demnach wird der Zustand des ersten Zustandsspeichers mit invertiertem Vorzeichen rückgekoppelt. Die rechentechnische Implementierung der Invertierung des Vorzeichens einer Größe ist eine Bitoperation, die in einem Rechenschritt vollzogen wird.

Bei einem Verhältnis der Abtastfrequenz **$f_s$** zur jeweiligen Frequenz der gesuchten diskreten Spektralkomponente $f_g$ von **$f_s$**/$f_g$ = 4 wird der Koeffizienten $c_{re}$ = 0. Demnach wird der Zustand des ersten Zustandsspeichers nicht rückgekoppelt. Damit entfallen alle Rechenschritte zur Berechnung der Rückkopplungsgröße aus dem ersten Zustandsspeicher ersatzlos.

Bei einem Verhältnis der Abtastfrequenz **$f_s$** zur jeweiligen Frequenz der gesuchten diskreten Spektralkomponente $f_g$ von **$f_s$**/$f_g$, = 6 wird der Koeffizienten $c_{re}$ = 1. Demnach wird der Zustand des ersten Zustandsspei-chers vorzeichenrichtig, also unverändert, rückgekop-pelt.

Im Erfolg der Erfindung ist der Goertzel-Algorhitmus unter den erfindungsgemäßen Verhältnisse der Abtastfrequenz **$f_s$** zur jeweiligen Frequenz der gesuchten diskreten Spektralkomponente $f_g$ mit einer verminderten Anzahl von Rechenschritten, insbesondere von aufwän-digen Multiplikationen, implementierbar. Der verminder-te rechentechnische Aufwand ermöglicht, mit einer geringeren Leistung zur Berechnung der jeweiligen Magnitude der gesuchten diskreten Spektralkomponente auszukommen. Vorteilhafterweise ist somit der Goertzel-Al-gorhitmus auch in speiseleistungsbegrenzten Einrich-tungen implementierbar. Einzelheiten hierzu sind in den Ausführungsbeispielen angegeben.

Die Erfindung wird nachstehend anhand von Ausführungsbeispielen näher erläutert. Die dazu erforderlichen Zeichnungen zeigen:

Figur 1     ein Blockschaltbild des Goertzel-Algorhitmus,

Figur 2     eine Darstellung einer Folge von mathematischen Operationen nach dem Goertzel-Algorhitmus in seiner allgemeinen Form,

Figur 3     eine Darstellung einer Folge von mathematischen Operationen nach dem Goertzel-Algorhitmus in einer ersten Ausführungsform,

Figur 4     eine Darstellung einer Folge von mathematischen Operationen nach dem Goertzel-Algorhitmus in einer zweiten Ausführungsform,

Figur 5     eine Darstellung einer Folge von mathematischen Operationen nach dem Goertzel-Algorhitmus in einer dritten Ausführungsform und

Figur 6     eine Prinzipdarstellung der Implementierung des erfindungsgemäßen Demudulators zur Trägererkennung.

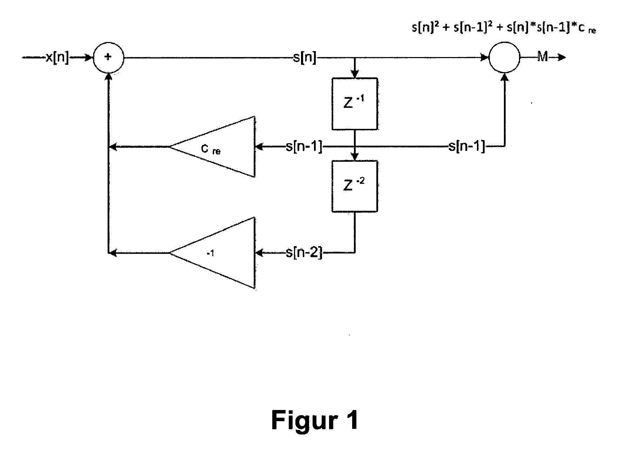

In der Figur 1 ist ein Blockschaltbild eines digitalen Filters nach dem Goertzel-Algorhitmus in seiner allgemeinen Form dargestellt. Das Filter umfasst einen Rückwärtszweig, der von jedem digitalen Abtastwert **x[n]** durchlaufen wird und der zwei aufeinanderfolgende Zu-standsspeicher **Z$^{-1}$** und **Z$^{-2}$** umfasst. Die Ausgangssig-nale **s[n-1]** und **s[n-2]** der Zustandsspeicher **Z$^{-1}$** und **Z$^{-2}$** werden individuell gewichtet auf den jeweiligen digitalen Abtastwert x[n] unter Bildung des Symbolwerts **s[n]** rückgekoppelt. Dabei wird das Ausgangssignal **s[n-1]** des ersten Zustandsspeichers **Z$^{-1}$** mit dem Rückkopplungs-

koeffizient $c_{re}$ gewichtet und das Ausgangssignal **s[n-2]** des zweiten Zustandsspeichers **Z$^{-2}$** mit dem Faktor -1 gewichtet. Der Rückkopplungskoeffizient **c$_{re}$** wird durch folgende Gleichung beschrieben:

$$c_{re} = 2 * \cos(2 * \pi * \frac{f_g}{f_s})$$

wobei bedeuten:

$f_s$ - Abtastfrequenz
$f_g$ - gesuchte Frequenz, Symbolfrequenz.

Ferner umfasst das digitale Filter einen Vorwärtszweig, in dem das Ausgangssignal **s[n-1]** des ersten Zustandsspeichers **Z$^{-1}$** mit dem Symbolwert **s[n]** zum komplexen Filterausgangswert **M** verknüpft wird, welcher die gesuchte spektrale Kompomente **f$_g$** nach Betrag und Phase beschreibt.

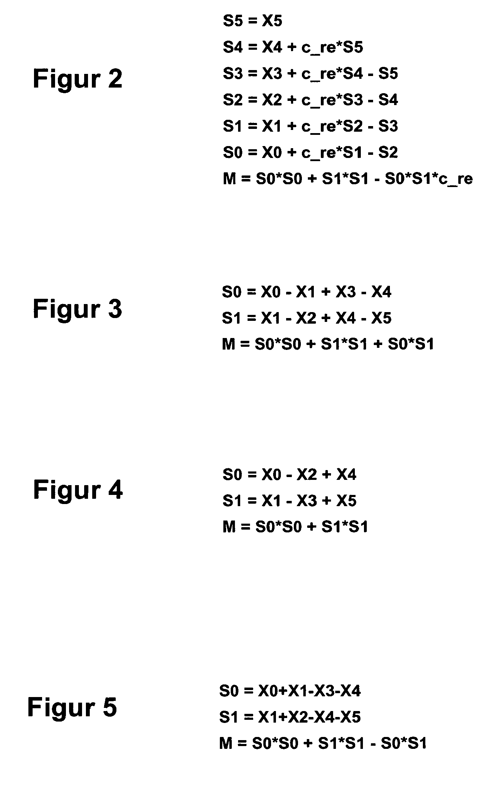

In der Figur 2 ist die Folge der mathematischen Operationen nach dem Goertzel-Algorhitmus in seiner allgemeinen Form für n=6 Stützstellen X0 bis X5 dargestellt. Um zu dem gesuchten Filterausgangswert **M** zu kommen, sind 9 Multiplikationen und 11 Additionen für jede gesuchte diskrete Spektralkomponente **fg** erforderlich. Dieser mathematische Aufwand bedarf zu seiner Abarbeitung 53 Rechenschritte des ausführenden Prozessors, wie beispielsweise dem MSP430 der Firma Texas Instruments.

In der Figur 3 ist die Folge der mathematischen Operationen nach dem Goertzel-Algorhitmus in einer ersten Ausführungsform der Erfindung unter der Randbedingung, dass das Verhältnis der Abtastfrequenz **f$_s$** zur jeweiligen Frequenz der gesuchten diskreten Spektralkomponente **f$_g$** von **f$_s$** / **f$_g$** = 3 ist, für n=6 Stützstellen X0 bis X5 dargestellt.

Dabei nimmt der Rückkopplungskoeffizient **c$_{re}$** den Wert **c$_{re}$** = -1 an. Bei dieser Ausführungsform wird das Ausgangssignal **s[n-1]** des ersten Zustandsspeichers **Z$^{-1}$** mit invertiertem Vorzeichen gewichtet auf den jeweiligen digitalen Abtastwert **x[n]** rückgekoppelt. Die rechentechnische Implementierung der Invertierung des Vorzeichens einer Größe ist eine Bitoperation, die in einem Rechenschritt vollzogen wird.

Um bei dieser Ausführungsform zu dem gesuchten Filterausgangswert **M** zu kommen, sind 3 Multiplikationen und 8 Additionen für jede gesuchte diskrete Spektralkomponente **f$_g$** erforderlich. Dieser mathematische Aufwand bedarf zu seiner Abarbeitung 20 Rechenschritte des ausführenden Prozessors, wie beispielsweise dem MSP430 der Firma Texas Instruments, und damit 62 % weniger als nach dem bekannten Goertzel-Algorhitmus in seiner allgemeinen Form.

In der Figur 4 ist die Folge der mathematischen Operationen nach dem Goertzel-Algorhitmus in einer zweiten Ausführungsform der Erfindung unter der Randbedingung, dass das Verhältnis der Abtastfrequenz **f$_s$** zur jeweiligen Frequenz der gesuchten diskreten Spektralkomponente **f$_g$** von **f$_s$** / **f$_g$** = 4 ist, für n=6 Stützstellen X0 bis X5 dargestellt.

Dabei nimmt der Rückkopplungskoeffizient **c$_{re}$** den Wert **c$_{re}$** = 0 an. Bei dieser Ausführungsform wird das Ausgangssignal **s[n-1]** des ersten Zustandsspeichers **Z$^{-1}$** nicht auf den jeweiligen digitalen Abtastwert **x[n]** rückgekoppelt. Damit entfallen alle Rechenschritte zur Berechnung der Rückkopplungsgröße aus dem ersten Zustandsspeicher **Z$^{-1}$** ersatzlos.

Um bei dieser Ausführungsform zu dem gesuchten Filterausgangswert **M** zu kommen, sind 2 Multiplikationen und 5 Additionen für jede gesuchte diskrete Spektralkomponente **f$_g$** erforderlich. Dieser mathematische Aufwand bedarf zu seiner Abarbeitung 11 Rechenschritte des ausführenden Prozessors, wie beispielsweise dem MSP430 der Firma Texas Instruments, und damit 79 % weniger als nach dem bekannten Goertzel-Algorhitmus in seiner allgemeinen Form.

Schließlich ist in der Figur 5 die Folge der mathematischen Operationen nach dem Goertzel-Algorhitmus in einer zweiten Ausführungsform der Erfindung unter der Randbedingung, dass das Verhältnis der Abtastfrequenz **f$_s$** zur jeweiligen Frequenz der gesuchten diskreten Spektralkomponente **f$_g$** von **f$_s$** / **f$_g$** = 6 ist, für n=6 Stützstellen X0 bis X5 dargestellt.

Dabei nimmt der Rückkopplungskoeffizient **c$_{re}$** den Wert **c$_{re}$** = 1 an. Bei dieser Ausführungsform wird das Ausgangssignal **s[n-1]** des ersten Zustandsspeichers **Z$^{-1}$** vorzeichenrichtig, also unverändert, auf den jeweiligen digitalen Abtastwert **x[n]** rückgekoppelt.

Um bei dieser Ausführungsform zu dem gesuchten Filterausgangswert **M** zu kommen, sind 3 Multiplikationen und 8 Additionen erforderlich. Dieser mathematische Aufwand bedarf zu seiner Abarbeitung 20 Rechenschritte des ausführenden Prozessors, wie beispielsweise dem MSP430 der Firma Texas Instruments, und damit 62 % weniger als nach dem bekannten Goertzel-Algorhitmus in seiner allgemeinen Form.

Unter diesen Randbedingungen ist ein Demodulator für frequenzumgetastete Signale unter Verwendung des Goertzel-Algorhitmus in speiseleistungsbegrenzten Einrichtungen implementierbar.

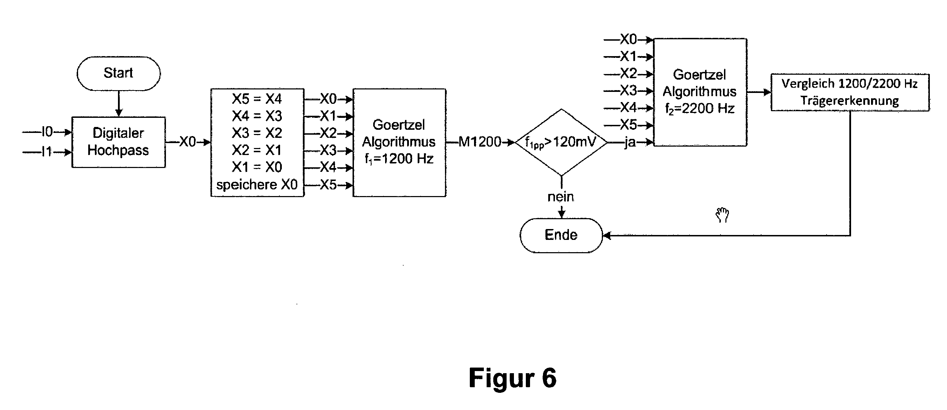

Hierzu ist in der Figur 6 eine Prinzipdarstellung der Implementierung des erfindungsgemäßen Demodulators zur Trägererkennung von frequenzumgetasteten Signalen gezeigt. Dabei wird die Frequenz zwischen 1200 Hz und 2200 Hz umgetastet, wobei diese Frequenzen als Symbolfrequenzen bezeichnet und bei der Demodulation jeweils als diskrete Spektralkomponente fg gesucht werden. Mit einer Symbolfrequenz **f$_1$** = 1200 Hz wird eine logische Eins und mit der anderen Symbolfrequenz **f$_2$** = 2200 Hz wird eine logische Null übertragen.

Zunächst wird das Leitungssignal in einem digitalen Hochpass gefiltert. Das gefilterte Leitungssignal wird abgetastet und auf die Abtatswerte X0 bis X5 der Goertzel-Algorhitmus vorzugsweise mit einer Abtastfre-

quenz $f_s$ = 7200 Hz, also in Höhe der sechsfachen Frequenz der gesuchten Symbolfrequenz $f_1$ = 1200 Hz, angewendet. Der Filterausgangswert **M** wird bewertet. Sofern die Amplitude des Filterausgangswert **M1200** eine Spannung von 120 mV übersteigt, wird in einer ersten Ausführungsform auf die vorhandenen Abtatswerte X0 bis X5 der Goertzel-Algorhitmus erneut, jedoch in seiner allgemeinen Form angewendet.

In einer alternativen Ausführungsform werden zur Ermittlung des Filterausgangswert **M2200** der zweiten gesuchten Symbolfrequenz $f_2$ = 2200 Hz neue Abtatswerte X0 bis X5 nunmehr mit einer Abtastfrequenz $f_s$ = 13200 Hz, also in Höhe der sechsfachen Frequenz der gesuchten Symbolfrequenz $f_2$ = 2200 Hz, ermittelt und der Goertzel-Algorhitmus in seiner erfindungsgemäßen Form angewendet.

Unabhängig von der Art der Ermittlung des Filterausgangswerts **M2200** der zweiten gesuchten Symbolfrequenz $f_2$ = 2200 Hz werden die Amplituden der Filterausgangswerte **M1200** und **M2200** beider gesuchter Symbolfrequenzen $f_1$ = 1200 Hz und $f_2$ = 2200 Hz miteinander verglichen. Soweit die Amplitude des Filterausgangswerts **M1200** die Amplitude des Filterausgangswerts **M2200** übersteigt, wird eine logische Eins ausgegeben. Anderenfalls wird, wenn die Amplitude des Filterausgangswerts **M2200** die Amplitude des Filterausgangswerts **M1200** übersteigt, wird eine logische Null ausgegeben.

**Bezugszeichenliste**

| | |
|---|---|
| x[n] | Abtastwert |
| **Z$^{-1}$**, **Z$^{-2}$** | Zustandsspeicher |
| $c_{re}$ | Rückkopplungskoeffizient |
| s[n] | Symbolwert |
| s[n-1], s[n-2] | Ausgangssignal |
| M | Filterausgangswert |
| X0 bis X5 | Stützstelle |

**Patentansprüche**

1. Demodulator für frequenzumgetastete Signale unter Verwendung des Goertzel-Algorhitmus nach der allgemeinen rekursiven Berechnungsvorschrift

$$M = s[n]^2 + s[n-1]^2 + s[n] * s[n-1] * c_{re}$$

mit

$$s[n] = x[n] + c_{re} * s[n-1] - s[n-2]$$

wobei

M die Magnitude der gesuchten diskreten Spektralkomponente,
x[n] die Abtastwerte des Eingangssignals,
s[n] Zustandssignale und
$c_{re}$ der Rückkopplungskoeffizient des Zustandssignals s[n-1]

sind, wobei

$$c_{re} = 2 * \cos\left(2 * \pi * \frac{f_g}{f_s}\right)$$

mit der Abtastfrequenz $f_s$ und der gesuchten Frequenz $f_g$ ist,
**dadurch gekennzeichnet,**
**dass** die Abtastfrequenz $f_s$ ein ganzzahliges Vielfaches der Frequenz $f_g$ der gesuchten diskreten Spektralkomponente ist.

2. Demodulator nach Anspruch 1
**dadurch gekennzeichnet,**
**dass** das Verhältnis der Abtastfrequenz $f_s$ zur Frequenz $f_g$ der gesuchten diskreten Spektralkomponente genau 3 ist.

3. Demodulator nach Anspruch 1
**dadurch gekennzeichnet,**
**dass** das Verhältnis der Abtastfrequenz $f_s$ zur Frequenz $f_g$ der gesuchten diskreten Spektralkomponente genau 4 ist.

4. Demodulator nach Anspruch 1
**dadurch gekennzeichnet,**
**dass** das Verhältnis der Abtastfrequenz $f_s$ zur Frequenz $f_g$ der gesuchten diskreten Spektralkomponente genau 6 ist.

$$s[n]^2 + s[n-1]^2 + s[n]*s[n-1]*c_{re}$$

# Figur 1

**Figur 2**

$$S5 = X5$$
$$S4 = X4 + c\_re*S5$$
$$S3 = X3 + c\_re*S4 - S5$$
$$S2 = X2 + c\_re*S3 - S4$$
$$S1 = X1 + c\_re*S2 - S3$$
$$S0 = X0 + c\_re*S1 - S2$$
$$M = S0*S0 + S1*S1 - S0*S1*c\_re$$

**Figur 3**

$$S0 = X0 - X1 + X3 - X4$$
$$S1 = X1 - X2 + X4 - X5$$
$$M = S0*S0 + S1*S1 + S0*S1$$

**Figur 4**

$$S0 = X0 - X2 + X4$$
$$S1 = X1 - X3 + X5$$
$$M = S0*S0 + S1*S1$$

**Figur 5**

$$S0 = X0+X1-X3-X4$$
$$S1 = X1+X2-X4-X5$$
$$M = S0*S0 + S1*S1 - S0*S1$$

**Figur 6**

EP 2 755 360 A1

Europäisches
Patentamt

European
Patent Office

Office européen
des brevets

**EUROPÄISCHER RECHERCHENBERICHT**

Nummer der Anmeldung

EP 14 00 0065

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2012/093264 A1 (YAMAGUCHI KOUICHIRO [JP]) 19. April 2012 (2012-04-19) * Absatz [0001] - Absatz [0012] * * Absatz [0044] - Absatz [0048] * * Abbildung 2 * ----- | 1-4 | INV. H04L27/14 |
| X | "DTMF Touch Tone Decoder Using Microchip PIC Microprocessor : Signal Processing Algorithm Description", , 23. Oktober 2010 (2010-10-23), XP055111278, Gefunden im Internet: URL:http://www.instructables.com/id/DTMF-Touch-Tone-Decoder-Using-Microchip-PIC-Microp/step2/Signal-Processing-Algorithm-Description/ [gefunden am 2014-04-01] * Absatz [0001] - Absatz [0003] * ----- | 1-4 | |
| A | Alan V Oppenheim ET AL: "Discrete-Time Signal Processing , The Goertzel Algorithm" In: "Discrete-Time Signal Processing , The Goertzel Algorithm", 1. Januar 1989 (1989-01-01), DISCRETE-TIME SIGNAL PROCESSING, XP055111233, Seiten 633-635, * Gleichung (9.9) * * Abbildung 9.2 * ----- -/-- | 1-4 | RECHERCHIERTE SACHGEBIETE (IPC)  H04L |

Der vorliegende Recherchenbericht wurde für alle Patentansprüche erstellt

| Recherchenort | Abschlußdatum der Recherche | Prüfer |
|---|---|---|
| Den Haag | 3. April 2014 | Devillers, Bertrand |

EPO FORM 1503 03.82 (P04C03)

**Europäisches Patentamt**

**European Patent Office**

**Office européen des brevets**

**EUROPÄISCHER RECHERCHENBERICHT**

Nummer der Anmeldung

EP 14 00 0065

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | Gg Uner Arslan: "Literature Survey on Dual-Tone Multiple Frequency DTMF Detector Implementation", , 31. März 1998 (1998-03-31), XP055111221, Gefunden im Internet: URL:http://users.ece.utexas.edu/~bevans/courses/ee382c/projects/spring98/arslan/litsurvey.pdf [gefunden am 2014-04-01] * Abschnitt 4 *  ----- | 1-4 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 3. April 2014 | Devillers, Bertrand |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 00 0065

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-04-2014

| Im Recherchenbericht angeführtes Patentdokument | Datum der Veröffentlichung | Mitglied(er) der Patentfamilie | Datum der Veröffentlichung |
|---|---|---|---|
| US 2012093264 A1 | 19-04-2012 | JP 2012090048 A<br>US 2012093264 A1 | 10-05-2012<br>19-04-2012 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

**In der Beschreibung aufgeführte Patentdokumente**

- US 5818296 A

**In der Beschreibung aufgeführte Nicht-Patentliteratur**

- *The Goertzel Algorithm, http://eetimes.com/design/embedded/4024443/The-Goertzel-Algorithm*

- Modified Goetzel Algorithm in DTMF Detection Using the TMS320C80. *Digital Signal Processing Solutions,* 1996